# EUROPÄISCHE PATENTANMELDUNG

(11) **EP 1 440 856 A2**
(43) Veröffentlichungstag der Anmeldung: **28.07.2004**
(21) Anmeldenummer: 04000712.2
(22) Anmeldetag: 15.01.2004
(51) Int. Cl.: B60S 1/08

(54) **Verfahren und Vorrichtung zur Sichtverbesserung und zur Bestimmung der Wettersituation**

(30) Priorität: 24.01.2003 DE 10303047
(71) Anmelder: DaimlerChrysler AG, 70567 Stuttgart (DE)
(72) Erfinder: Holz, Michael, 89250 Senden (DE); Moisel, Jörg, 89233 Neu-Ulm (DE); Weidel, Michael, 89250 Senden (DE)

(57) **Zusammenfassung**

Die Erfindung gibt ein Verfahren und eine Vorrichtung zur Verbesserung der Sicht in Fahrzeugen an, wobei Bilddaten aus der Umgebung erfaßt werden und zusätzlich eine Bestimmung der Wettersituation aus den Bilddaten erfolgt und zur Ermittlung der Wettersituation ein Vergleich von Bilddaten eines oder mehrerer Bereiche eines Bildes und/oder mehrerer zu verschiedenen Zeiten aufgenommener Bilder verwendet wird.

## Beschreibung

Die Erfindung betrifft ein Verfahren und eine Vorrichtung zur Verbesserung der Sicht in Fahrzeugen, wobei zusätzlich eine Bestimmung der Wettersituation aus Bilddaten vorgenommen wird.

Vorrichtungen und Verfahren zur Verbesserung der Sicht in Fahrzeugen sind im Stand der Technik bereits an verschiedenen Stellen offenbart und teilweise auch in Serienfahrzeugen umgesetzt. So wird beispielsweise in der deutschen Offenlegungsschrift DE 100 02 069 A1 eine Anordnung zur Verbesserung der Sicht in Fahrzeugen beschrieben, bei der über eine Beleuchtungsoptik gepulste Infrarotstrahlung emittiert wird und die so beleuchtete Verkehrsszene über eine Empfangsoptik erfasst und dem Fahrer dargestellt wird.

Zur Bestimmung der Wettersituation werden seit einiger Zeit in diversen Serienfahrzeugen sogenannte Regensensoren eingesetzt. Ein mögliches Funktionsprinzip dieser Regensensoren besteht darin, dass die Windschutzscheibe eines Fahrzeuges als planarer Lichtwellenleiter zwischen einem strahlungsemittierenden Sender und einem Empfänger verwendet wird. Aus den durch Tropfenbildung auf der Scheibe verursachten Auskoppelverlusten dieses Wellenleiters wird das Auftreten von Regen detektiert. Andere Regensensoren auf optischer Basis erfassen einen Ausschnitt der Windschutzscheibe mit einer Kamera und werten das so gewonnene Bild im Hinblick auf das Vorhandensein von Regentropfen aus. Hierbei wird die Aufnahme von Objekten aus dem Umgebungsbereich des Fahrzeuges bewusst unterdrückt (vgl. EP 0 832 798 B1).

Ein erster Ansatz zur Kombination von Sichtverbesserungssystemen und Systemen zur Bestimmung der Wettersituation ist in der DE 101 04 734 A1 beschrieben. Das dort vorgestellte Verfahren beruht auf der Tatsache, dass die Bilddaten eines von einer Kamera aufgenommenen Bildes abhängig von der aktuellen Wettersituation unterschiedliche Eigenschaften aufweisen. Insbesondere wird in der genannten Patentanmeldung erläutert, dass der Kontrast eines Bildes bei sich beispielsweise aufgrund Regens oder Nebels verschlechternden Sichtverhältnissen abnimmt. Ferner geht aus der genannten Schrift hervor, dass die vom Bildaufnahmesystem gewonnnen Daten zur Steuerung von Fahrzeugkomponenten wie beispielsweise eines Scheibenwischers verwendet werden. Es wird in der DE 101 04 734 A1 jedoch kein konkretes Verfahren angegeben, wie beispielsweise die Stärke von Niederschlag erkannt werden kann bzw. Regen von Nebel unterschieden werden kann.

Es ist somit Aufgabe der vorliegenden Erfindung, ein Verfahren und eine Vorrichtung anzugeben, die die zuverlässige Bestimmung unterschiedlicher Wettersituationen mittels eines Sichtverbesserungssystemes für Fahrzeuge gestattet.

Die Aufgabe wird durch ein Verfahren und eine Vorrichtung mit den Merkmalen der Patentansprüche 1 und 9 gelöst. Vorteilhafte Ausgestaltungen und Weiterbildungen der Erfindung sind durch die untergeordneten Patentansprüche beschrieben.

Das erfindungsgemäße Verfahren gestattet die Gewinnung von Informationen über die aktuelle Wettersituation aus einer zusätzlichen Auswertung von Bilddaten aus dem Umgebungsbereich eines Fahrzeuges. Hierzu werden von einem Sichtverbesserungssystem gelieferte Bilddaten eines oder mehrerer Bereiche eines Bildes und/oder Bilddaten von mehreren zu verschiedenen Zeiten aufgenommenen Bildern verglichen.
Dabei wird in vorteilhafter Weise die Tatsache ausgenutzt, dass beispielsweise Regentropfen auf einer Fahrzeugscheibe bzw. einem Kameraobjektiv zu einer merklichen Veränderung der Bilddaten eines aufgenommenen Bildes führen. Bei Regen sammeln sich Tropfen auf der Scheibe, die regelmäßig vom Scheibenwischer wieder entfernt werden. Der nach dem Wischvorgang auf der Scheibe verbleibende dünne Wasserfilm hat keinen Einfluss auf die Eigenschaften der aufgenommenen Bilder. Im Gegensatz dazu führen die Tropfen auf der Scheibe zu einer Defokussierung der Lichtstrahlen, die die Wassertropfen durchqueren, das heißt, das Bild in diesem Bereich wird unscharf, insgesamt lichtschwächer oder es treten Schlieren im Bild auf. Üblicherweise ist diese Wirkung eines Regentropfens auf einen Bildbereich begrenzt und betrifft nicht das gesamte Bild.
Aus einer geeigneten Auswertung der Bilddaten kann somit die Wettersituation "Regen" zuverlässig erkannt werden. Es ist dabei nicht erforderlich, mit der Kamera die Scheibe zu fokussieren; vielmehr kann mit der Kamera nach wie vor zur Sichtverbesserung der Umgebungsbereich des Fahrzeuges aufgenommen werden. Damit gestattet das erfindungsgemäße Verfahren die Hinzunahme einer zusätzlichen Sensorfunktionalität für ein Sichtverbesserungssystem ohne substantielle Änderungen in der Hardware eines vorhandenen Systems zur Sichtverbesserung; es kann auf einfache Weise mittels einer geeigneten Bildverarbeitungssoftware in einem vorhandenen System implementiert werden.
Dabei kann das Bild zur Verbesserung der Leistungsfähigkeit des Verfahrens in mehrere unterschiedliche Bereiche aufgeteilt werden. Dies ermöglicht die zuverlässige Unterscheidung von beispielsweise Nebel und Regen: Aufgrund der typischerweise inhomogenen Verteilung von Regentropfen auf einer Fahrzeugscheibe weisen die Bilddaten aus unterschiedlichen Bereichen der Scheibe unterschiedliche Eigenschaften auf. Bei einer geeigneten Wahl der Abmessungen der betrachteten Bildbereiche kann beispielsweise erreicht werden, dass in einem Bereich bereits ein oder mehrere Tropfen auf der Scheibe vorhanden sind, während ein anderer Bereich noch vollständig trocken ist. Somit weisen die Bilddaten der betroffenen Bereiche deutliche Unterschiede auf. Im Gegensatz hierzu haben die Bilddaten aus unterschiedlichen Bereichen des Bildes für die Wettersituation "Nebel" üblicherweise ähnliche Eigenschaften. Somit lässt sich auf einfache Weise durch einen Vergleich unterschiedlicher Bereiche eines Bildes Regen von Nebel allein mit Mitteln der Bildverarbeitung unterscheiden.
Ebenso lassen sich in vorteilhafter Weise auch zu unterschiedlichen Zeitpunkten aufgenommene Bilder zur Ermittlung der Wettersituation verwenden. So werden sich beispielsweise bei Regen die Bilddaten aus aufeinanderfolgend bzw. nacheinander aufgenommenen Bildern wesentlich unterscheiden, während dies bei Nebel typischerweise weniger ausgeprägt bzw. nicht gegeben ist. Dabei wird beispielsweise eine plötzliche Veränderung der Bilddaten z. B. eine Änderung innerhalb einer Sekunde oder von Bild zu Bild als Regen interpretiert, während das Erfassen einer Nebelsituation mit einer langsamen, kontinuierlichen Veränderung der Bilddaten einhergeht.
Eine Kombination der Betrachtung verschiedener Bereiche eines Bildes und des Vergleichs mehrerer zu unterschiedlichen Zeitpunkten aufgenommener Bilder bzw. Bildbereiche gestattet die weitere Verbesserung des erfindungsgemäßen Verfahrens im Hinblick auf die zuverlässige Unterscheidung verschiedener Wettersituationen.

Eine vorteilhafte Methode zum Vergleich der Bilddaten stellt die Ermittlung einer Maßzahl M für die Schärfe bzw. den Kontrast des Bildes dar. Die aus den Bilddaten errechnete Maßzahl M kann dann auf einfache Weise zur Bestimmung der aktuellen Wettersituation herangezogen werden; sie kann beispielsweise mit bestimmten Schwellenwerten oder Wertebereichen für die Wettersituationen "Nebel" oder "Regen" verglichen werden.

Dabei hat es sich besonders bewährt, M aus den Differenzen der Intensitäten benachbarter oder umliegender Bildpixel zu bestimmen. Hierzu wird in vorteilhafter Weise das folgende Verfahren angewandt: Zunächst werden für einen Bildbereich, der auch das gesamte Bild umfassen kann, die relativen Intensitätsdifferenzen benachbarter Pixel ermittelt. Zur Vereinfachung beschränkt sich die folgende Darstellung auf eine Spalte aus 800 Pixeln. Für die betrachteten 800 Pixel werden jeweils für benachbarte Pixel die relativen Intensitätsdifferenzen - diese werden beispielsweise nach dem Maximum oder nach der Summe der beiden Intensitäten normiert - in Prozent bestimmt. Nachfolgend wird ermittelt, für wie viele Pixelpaare die relative Intensitätsdifferenz einen bestimmten prozentualen Wert überschreitet. So kann z.B. als Schwellenwert eine relative Intensitätsdifferenz von 3 %, 5 % oder 10 % verwendet werden. Aus der Anzahl der Pixelpaare, die diesen Schwellenwert überschreiten, lässt sich unmittelbar die Maßzahl bestimmen. Bei einer Betrachtung von einzelnen Bildbereichen evtl. unterschiedlicher Größe ist es erforderlich, die Maßzahl zu normieren. Beispielsweise kann die Maßzahl stets auf die Gesamtzahl der verglichenen Pixelpaare bezogen werden. Überschreiten z. B. im vorliegenden Beispiel 100 der 800 relativen Intensitätsdifferenzen einen Wert von 5%, so ergibt sich für die normierte Maßzahl ein Wert von 0,125 bzw. 12,5%.

Die so gewonnene Maßzahl M ermöglicht eine einfache Auswertung der Bilddaten im Hinblick auf die Wettersituation. Das Bild soll beispielsweise in mehrere einzelne Bereiche unterteilt werden, für die M jeweils separat bestimmt wird. Im Fall von Regen steht zu erwarten, dass aufgrund der inhomogenen Verteilung der Regentropfen auf der Scheibe für die einzelnen Bereiche deutlich voneinander abweichende Maßzahlen für ein Bild ermittelt werden. Da durch Nebel typischerweise das gesamte Bild homogen betroffen ist, weichen in diesem Fall die Maßzahlen für unterschiedliche Bildbereiche eines Bildes wesentlich geringer bzw. vernachlässigbar voneinander ab. Dies gestattet die zuverlässige Unterscheidung von Regen und Nebel anhand eines einfachen Kriteriums. Somit lässt sich der damit verbundene apparative und Verfahrensaufwand wesentlich reduzieren.

Auch der zeitliche Verlauf der Bilddaten und damit der Maßzahl lässt sich in vorteilhafter Weise zur Bestimmung der aktuellen Wettersituation verwenden. Typischerweise ändert sich durch auf die Scheibe auftreffende Regentropfen der Kontrast und damit die Maßzahl von einem Bild zu einem nachfolgenden Bild deutlich. Im Gegensatz hierzu tritt diese Änderung der Maßzahl bei auftretendem Nebel wesentlich langsamer und stetiger ein. Der zeitliche Verlauf von M stellt somit ein zusätzliches Kriterium zur Unterscheidung verschiedener Wettersituationen dar. Darüber hinaus gestattet diese Vorgehensweise auf einfache Weise die Bestimmung der Intensität von Niederschlag. Die Niederschlagsintensität kann ohne großen Aufwand aus dem zeitlichen Verlauf der Maßzahl M von einzelnen Bildbereichen oder ganzen Bildern abgeleitet werden.

Eine Kombination sowohl der bereichsweisen als auch der zeitlichen Betrachtung der Maßzahl erhöht die Erkennungssicherheit für unterschiedliche Wettersituationen.

In besonders vorteilhafter Weise lässt sich die Maßzahl dazu verwenden, bestimmte Fahrzeugkomponenten zu aktivieren bzw. zu steuern. So hat es sich beispielsweise bewährt, bei der Detektion von einsetzendem Regen durch das erfindungsgemäße Verfahren die Scheibenwischer eines Fahrzeuges automatisch anzuschalten. Aufgrund der oben geschilderten Möglichkeit, die Intensität des Niederschlages aus der Maßzahl zu bestimmen, ist es darüber hinaus vorteilhaft, die Scheibenwischergeschwindigkeit entsprechend anzupassen. In ähnlicher Weise lässt sich bei der Detektion von Nebel durch das erfindungsgemäße Verfahren das Zuschalten der Nebelscheinwerfer veranlassen. Eine weitere vorteilhafte Variante besteht darin, Komponenten eines Sichtverbesserungssystems wie beispielsweise Scheinwerfer entsprechend der aktuellen Wettersituation zu steuern.
In vorteilhafter Weise können zur Bestimmung der Maßzahl Bilddaten verwendet werden, die in einem bestimmten Zeitraum vor oder nach einer Aktion einer Fahrzeugkomponente aufgenommen wurden. Als besonders vorteilhaft hat es sich hierbei erwiesen, beispielsweise die Situation unmittelbar nach einem Wischvorgang des Scheibenwischers zur Verbesserung des Verfahrens zu verwenden. Die Tatsache, dass sich der nach dem Wischvorgang auf der Scheibe zurückbleibende dünne Wasserfilm nicht auf die Bildqualität auswirkt, lässt sich dazu ausnutzen, den Zeitraum unmittelbar nach einem Wischvorgang für einen Vergleich der Bilddaten mehrerer auf den Wischvorgang folgenden Bilder zu verwenden. Die unmittelbar nach dem Wischvorgang aufgenommenen Bilddaten lassen sich dabei als Referenzdaten verwenden, wodurch die Zuverlässigkeit des erfindungsgemäßen Verfahrens weiter verbessert wird.

Ebenso ist es vorteilhaft, die Bilddarstellung und eine eventuelle Aufbereitung der Bilddaten an die herrschende Wettersituation anzupassen. Beispielsweise ist es wünschenswert, bestimmte Parameter für die Bildaufbereitung bzw. Bildverarbeitung abhängig von der aktuellen Wettersituation auszuwählen. Beispielsweise hat es sich bewährt, in Abhängigkeit von der Wettersituation bestimmten von einer Bildaufnahmeeinrichtung ermittelten Intensitätswerten je nach Wettersituation unterschiedliche Werte für die Darstellung des Bildes in einer Bildanzeigevorrichtung zuzuordnen. Hierzu ist eine Bestimmung der aktuellen Wettersituation in der Umgebung des Fahrzeuges notwendig. Da das vorgestellte Verfahren die Bestimmung der Wettersituation aus den Bilddaten gestattet, bietet es hierfür eine einfache Möglichkeit; insbesondere ist kein Rückgriff auf Daten notwendig, die von separaten Sensoren geliefert werden.

In einer weiteren vorteilhaften Ausgestaltung der Erfindung werden abhängig von dem aktuellen Wert der Maßzahl M verschiedene Informationen bzw. Hinweise für einen Fahrer dargestellt. Besonders vorteilhaft ist hier das Anzeigen von für die jeweilige Situation empfohlenen Richtgeschwindigkeiten, die für die jeweiligen Wettersituationen beispielsweise in einer Speichereinheit hinterlegt sind; gerade bei Nebel und Regen hat es sich gezeigt, dass viele Fahrzeugführer für die jeweilige Situation unangemessen schnell fahren. Hier kann das erfindungsgemäße Verfahren einen wesentlichen Beitrag zur Verkehrssicherheit leisten.

Das Verfahren lässt sich besonders vorteilhaft in Vorrichtungen zur Sichtverbesserung in Kraftfahrzeugen einsetzen. Die erfindungsgemäße Vorrichtung zeigt eine Bildaufnahmeeinrichtung und eine Auswerteeinrichtung. Dabei ist die Auswerteeinrichtung geeignet, zur Ermittlung der Wettersituation einen Vergleich von Bilddaten eines oder mehrerer Bereiche des Bildes oder mehrerer zu verschiedenen Zeiten aufgenommener Bilder vorzunehmen. Die Auswerteeinrichtung zeigt hierzu Schnittstellen zur Zuführung der Bilddaten, eine Prozessoreinheit zur Implementation der Auswertung der Bilddaten und eine Speichereinheit, die es gestattet, die ermittelten Parameter, insbesondere Maßzahlen M zu speichern und damit einen Vergleich der Bilddaten mehrerer zu verschiedenen Zeiten aufgenommener Bilder bzw. unterschiedlicher Bildbereiche zu ermöglichen. Die erfindungsgemäße Vorrichtung vereinigt in sich somit die Regensensorfunktionalität und die Sichtverbesserungsfunktionalität. Damit erübrigt sich in Fahrzeugen, die mit dieser Vorrichtung ausgestattet sind, der Einbau eines zusätzlichen Regensensors.

Besonders vorteilhaft ist es, die erfindungsgemäße Vorrichtung als Infrarot-Sichtverbesserungssystem zu realisieren.
Hierzu ist die Bildaufnahmeeinrichtung beispielsweise als Infrarotkamera realisiert. Damit zeigt die Vorrichtung insbesondere für die Verwendung als Nachtsichtsystem besonders positive Eigenschaften - auch bei Nacht lassen sich aus der von Objekten aus der Fahrzeugumgebung emittierten bzw. gestreuten Infrarotstrahlung Bilder gewinnen, die gegenüber konventionell bspw. im sichtbaren Spektrum aufgenommenen Bildern einen erhöhten Informationsgehalt aufweisen.

In einer weiteren vorteilhaften Realisation der Erfindung ist zusätzlich eine Strahlungsquelle vorgesehen, die zumindest teilweise den von der Bildaufnahmeeinrichtung erfassten Bereich beleuchtet. Dabei kann diese Beleuchtung zeitlich und/oder örtlich begrenzt sein (beispielsweise 50ms je Sekunde oder nur in einem bestimmten Bildbereich), um die Funktionalität der Sichtverbesserung nicht zu stark zu beeinträchtigen. So ist es beispielsweise vorteilhaft, bei einer Beleuchtung mit der zusätzlichen Strahlungquelle die Anzeige des von der Bildaufnahmeeinrichtung aufgenommenen Bildes kurzzeitig zu unterdrücken. Dies entspricht dem Umschalten des Systems in einen "Regensensor-Modus". Durch diese Vorgehensweise wird die Irritation des Fahrers durch die vom Sichtverbesserungssystem aufgenommene zusätzliche Strahlung vermieden.

Es hat sich darüber hinaus bewährt, als zusätzliche Strahlungsquelle eine Infrarotquelle zu verwenden.
Erstens ist es bei der Realisation der erfindungsgemäßen Vorrichtung als Infrarot-Nachtsichtsystem aufgrund der Empfindlichkeit der Bildaufnahmeeinrichtung im infraroten Spektralbereich notwendig, als zusätzliche Strahlungsquelle eine in diesem Bereich emittierende Quelle zu verwenden; zweitens wird durch diese Wahl der emittierten Strahlung im nicht sichtbaren Spektralbereich erreicht, dass durch die kurzen Strahlungsimpulse zur Wetterbestimmung (Regensensor-Modus) eine Irritation des Fahrzeugführers bzw. des umgebenden Verkehrs weitgehend vermieden wird. Damit trägt die erfindungsgemäße Vorrichtung sowohl zur aktiven als auch zur passiven Verkehrssicherheit bei.

## Patentansprüche

1. Verfahren zur Verbesserung der Sicht in Fahrzeugen, wobei Bilddaten aus der Umgebung erfaßt werden und zusätzlich eine Bestimmung der Wettersituation aus den Bilddaten erfolgt,
**dadurch gekennzeichnet,**
**dass** zur Ermittlung der Wettersituation ein Vergleich von Bilddaten eines oder mehrerer Bereiche eines Bildes
und/oder mehrerer zu verschiedenen Zeiten aufgenommener Bilder verwendet wird.

2. Verfahren nach Anspruch 1,
**dadurch gekennzeichnet,**
**dass** der Vergleich der Bilddaten anhand einer Maßzahl für die Schärfe bzw. den Kontrast des Bildes vorgenommen wird.

3. Verfahren nach Anspruch 2,
**dadurch gekennzeichnet,**
**dass** die Maßzahl aus den Differenzen der Intensitäten benachbarter oder umliegender Pixel bestimmt wird.

4. Verfahren nach einem der vorangehenden Ansprüche,
**dadurch gekennzeichnet,**
**dass** aus dem zeitlichen Verlauf der Bilddaten die Intensität von Niederschlag bestimmt wird.

5. Verfahren nach einem der vorangehenden Ansprüche 2-4,
**dadurch gekennzeichnet,**
**dass** die Maßzahl zur Steuerung von Fahrzeugkomponenten verwendet wird.

6. Verfahren nach einem der vorangehenden Ansprüche 2-5,
**dadurch gekennzeichnet,**
**dass** anhand der Maßzahl Parameter für eine Bildaufbereitung bzw. Bildverarbeitung gewählt werden.

7. Verfahren nach einem der vorangehenden Ansprüche 2-6,
**dadurch gekennzeichnet,**
**dass** zur Bestimmung der Maßzahl Bilddaten verwendet werden, die in einem bestimmten Zeitraum vor oder nach einer Aktion einer Fahrzeugkomponente aufgenommen wurden.

8. Verfahren nach einem der vorangehenden Ansprüche 2-7,
**dadurch gekennzeichnet,**
**dass** abhängig von der Maßzahl einem Bediener unterschiedliche Informationen bzw. Hinweise dargestellt werden.

9. Vorrichtung zur Verbesserung der Sicht in Kraftfahrzeugen mit einer Bildaufnahmeeinrichtung und einer Auswerteeinrichtung,
**dadurch gekennzeichnet,**
**dass** die Auswerteeinrichtung geeignet ist, zur Ermittlung der Wettersituation einen Vergleich von Bilddaten eines oder mehrerer Bereiche eines Bildes und/oder mehrerer zu verschiedenen Zeiten aufgenommener Bilder vorzunehmen.

10. Vorrichtung nach Anspruch 9,
**dadurch gekennzeichnet,**
**dass** es sich bei der Bildaufnahmeeinrichtung um eine Infrarotkamera handelt.

11. Vorrichtung nach einem der Ansprüche 9 und 10,
**dadurch gekennzeichnet,**
**dass** zusätzlich eine Strahlungsquelle vorhanden ist, mit der ein von der Bildaufnahmeeinrichtung erfaßter Bereich zumindest teilweise beleuchtet wird.

12. Vorrichtung nach Anspruch 11,
**dadurch gekennzeichnet,**
**dass** die Strahlungsquelle Infrarotstrahlung aussendet.
